# EUROPÄISCHE PATENTSCHRIFT

(11) **EP 0 759 623 B1**
(45) Veröffentlichungstag und Bekanntmachung des Hinweises auf die Patenterteilung: **02.02.2000**
(21) Anmeldenummer: 96810541.1
(22) Anmeldetag: 14.08.1996
(51) Int. Cl.: G21C 19/07

(54) **Lageranordnung zum Lagern nuklearer Brennelemente und Lagergestell für eine derartige Anordnung**
Storage installation for nuclear fuel assemblies and storage rack therefor
Dispositif de stockage d'assemblages de combustible nucléaire et râtelier de stockage correspondant

(30) Priorität: 21.08.1995 EP 95810523
(43) Veröffentlichungstag der Anmeldung: 26.02.1997
(73) Patentinhaber: CCI AG, 8404 Winterthur (CH)
(72) Erfinder: Kielbowicz, Stanislaw, 8820 Wädenswil (CH)
(74) Vertreter: Sulzer Management AG

(56) Entgegenhaltungen:
- FR-A- 2 455 339
- FR-A- 2 462 767
- FR-A- 2 516 694
- US-A- 4 042 828
- US-A- 4 187 433

## Beschreibung

Die Erfindung betrifft eine Lageranordnung zum Lagern nuklearer Brennelemente entsprechend dem Oberbegriff des Patentanspruchs 1 sowie ein Lagergestell für eine derartige Anordnung.

Bei einer aus der DE-OS 29 30 237 bekannten Lageranordnung der genannten Art sind die zur Aufnahme der Brennelemente bestimmten vertikalen Kanäle durch übereinanderstehend angeordnete, sich kreuzende Blechstreifen gebildet. Die Blechstreifen sind zwischen einer Stützkonstruktion in Form einer unteren Gitterplatte und einer oberen Gitterplatte angeordnet, welche Gitterplatten je Oeffnungen zum Einführen bzw. Arretieren der Brennelemente aufweisen. Bei der bekannten Lageranordnung sind die Brennelemente auf der unteren Gitterplatte abgestützt, welche somit durch das Gewicht der Kanäle, und zusätzlich durch das Gewicht der Brennelemente belastet wird. Die bekannte Lageranordnung erfordert daher eine relativ aufwendige, hoch belastbare Konstruktion der unteren Gitterplatte.

Ein aus der US-A-4,042,828 bekanntes Lagergestell enthält einen unteren, einen mittleren und einen oberen Gitterrahmen und mehrere zur Aufnahme von Brennelementen bestimmte Kanäle, welche je in einem einzeln in das Lagergestell einzusetzenden Gehäuse ausgebildet sind. Die Gehäuse sind je in Öffnungen der drei Gitterrahmen geführt und mit über den oberen und den unteren Gitterrahmen nach oben bzw. nach unten vorstehenden Enden angeordnet. Die Brennelemente sind je über einen innerhalb des unteren Endes des jeweiligen Gehäuses angeordneten Support auf dem Boden des Lagerbeckens abgestützt, wobei die Gehäuse je auf dem betreffenden Support abgestützt oder auf dem oberen Gitterrahmen aufgehängt sind. Entsprechend ist der untere Gitterrahmen vom Gewicht der Brennelemente und vom Gewicht der Kanäle entlastet. Die bekannte Lageranordnung mit drei Gitterrahmen zur Führung der in ihnen seitlich gehaltenen Gehäuse der Kanäle erfordert jedoch eine relativ aufwendige Konstruktion des Lagergestells.

Der Erfindung liegt die Aufgabe zugrunde, eine verbesserte Lageranordnung sowie ein mit geringem Arbeits- und Kostenaufwand herstellbares Lagergestell der eingangs genannten Art in einer gegenüber bisherigen Ausführungen vereinfachten, leichten und zugleich stabilen Bauweise zu schaffen.

Diese Aufgabe wird erfindungsgemäss mit den Merkmalen des Patentanspruchs 1 gelöst.

Durch die erfindungsgemässe Lageranordnung wird gewährleistet, dass die Brennelemente voneinander und von der Beschaffenheit, z.B. von allfälligen Verformungen, der Stützkonstruktion unabhängig in die Kanäle eingeführt und ohne zusätzliche Belastung des Lagergestells über die Tragstücke auf den Boden abgestützt werden können. Ein wesentlicher Vorteil der erfindungsgemässen Ausführung besteht ferner darin, dass die in der Stützkonstruktion angeordneten Tragstücke, welche beliebige, gegebenenfalls unterschiedliche Höheneinstellungen der Brennelemente gestatten, mit den an ihnen ausgebildeten Anschlagpartien je in einem Abstand von einer oberen Partie der Stützkonstruktion positionierbar sind, der entsprechende vertikale Relativbewegungen der Tragstücke und der Stützkonstruktion zulässt. Dadurch ist, z.B. im Falle eines Erdbebens, zugleich eine Stabilisierung des Lagergestells erzielbar, da die durch die Brennelemente belasteten Tragstücke vertikale Bewegungen der Stützkonstruktion auf ein entsprechendes, voraus definierbares Mass begrenzen und damit einer Kippbewegung des Lagergestells entgegenwirken. Ein weiterer Vorteil der erfindungsgemässen Lageranordnung besteht darin, dass sie die Verwendung eines wesentlich leichteren Lagergestells als bei bisherigen Ausführungen gestattet.

Ausgestaltungen des Erfindungsgegenstandes sind in den abhängigen Ansprüchen angegeben.

Die Ausführung nach Anspruch 2 gestattet auf einfache Weise eine Aufstockung des Lagergestells und damit eine entsprechende Vergrösserung, gegebenenfalls eine Verdoppelung, der Lagerkapazität.

Gemäss Anspruch 3 können auch die in der zweiten Höhenlage angeordneten Brennelemente - über die bereits im unteren Lagergestell befindlichen Brennelemente - ohne zusätzliche Belastung der Stützkonstruktion des unteren Lagergestells auf dem Boden abgestützt werden.

Gemäss Anspruch 4 können auch die oberen Brennelemente in beliebigen Höhenabständen von den unteren Brennelementen über Zwischenstücke gelagert werden, welche gemäss Anspruch 5 relativ zum Lagergestell vertikal beweglich auf den unteren Brennelementen abgestützt oder, gemäss Anspruch 6, im Lagergestell feststehend angeordnet sein können.

Die Zwischenstücke können lose angeordnet oder, gemäss Anspruch 7, je mit einem der Brennelemente verbunden sein.

Gemäss Anspruch 8 kann das obere Lagergestell mit einer Bauhöhe ausgeführt werden, die nur einem Bruchteil der Länge der zu lagernden oberen Brennelemente entspricht, so dass die gesamte Bauhöhe der beiden Lagergestelle wesentlich kleiner sein kann als die doppelte Länge der zu lagernden Brennelemente.

Ein Lagergestell für die erfindungsgemässe Lageranordnung ist Gegenstand des Anspruchs 9. Diese Ausführung gestattet eine genaue Zentrierung und Führung der das Gewicht der Brennelemente aufnehmenden Tragstücke, von denen gemäss Anspruch 10 eine Teilzahl zugleich als Abstützungen für die Stützkonstruktion und damit für das gesamte Lagergestell verwendbar sind.

Die Ausführung nach Anspruch 11 gestattet eine von der Beschaffenheit des Bodens des Lagerbeckens unabhängige, genaue Positionierung und Nivellierung der Stützkonstruktion in einer vorbestimmten, z.B. die Zirkulation des Kühlmittels begünstigenden Höhenlage.

Die Erfindung wird anhand von in der Zeichnung schematisch dargestellten Ausführungsbeispielen erläutert. Es zeigen:
- Fig. 1 bis 5: Teil-Längsschnitte von erfindungsgemäss ausgebildeten Lageranordnungen für nukleare Brennelemente, je nach einer anderen Ausführungsform,
- Fig. 4a: eine Einzelheit einer Lageranordnung gemäss Fig.4, nach einer weiteren Ausführungsform,
- Fig. 6 und 7: je eine Einzelheit VI bzw. VII der Lageranordnung nach Fig. 5, in einer grösseren Darstellung,
- Fig. 8: einen Horizontalschnitt der Lageranordnung nach der Linie VIII-VIII in Fig. 5.

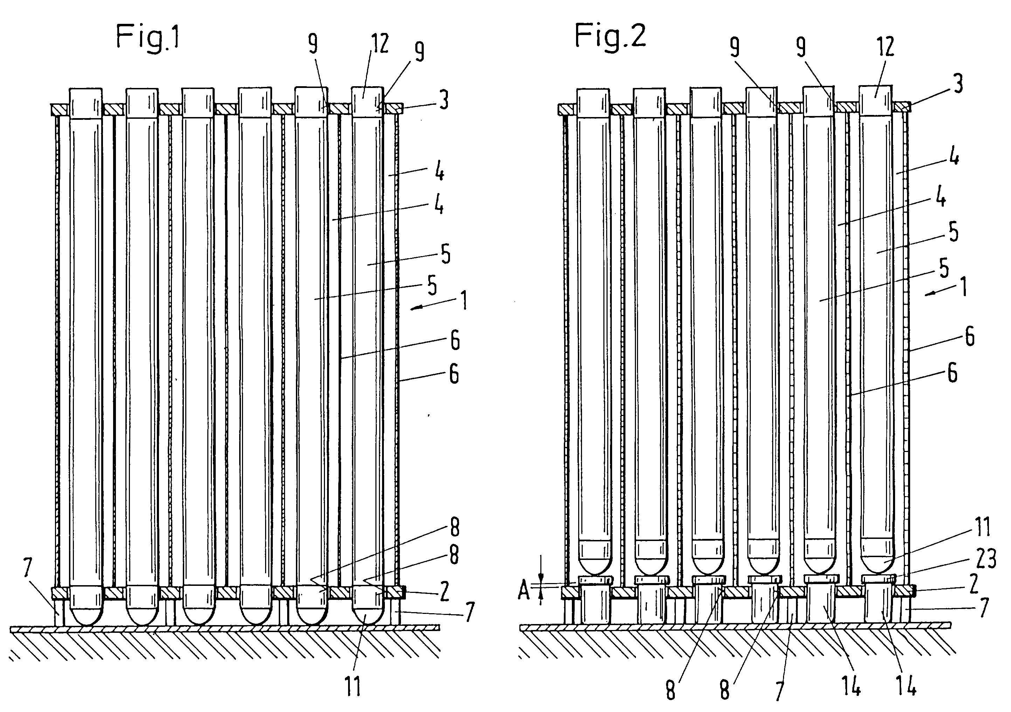

Die Lageranordnung nach Fig. 1 enthält ein in ein Lagerbecken einsetzbares Lagergestell 1 mit einer unteren Stützkonstruktion 2, einer oberen Haltekonstruktion 3 und mehreren, zwischen diesen nebeneinander angeordneten vertikalen Kanälen 4 zur Aufnahme von nuklearen Brennelementen 5. Die Stütz- und Haltekonstruktionen 2 und 3, welche beliebig ausgeführt sein können, sind in der Zeichnung vereinfacht je in Form einer Grundplatte bzw. einer Deckplatte dargestellt. Die Kanäle 4 sind durch Wände 6 begrenzt, die durch kreuzweise angeordnete Bleche aus einem neutronenabsorbierenden Werkstoff, z.B. einer Borlegierung, gebildet sind. Die Wände 6 können aus über die ganze Höhe des Lagergestells 1 verlaufenden Blechteilen oder, wie z.B. aus der eingangs genannten DE-OS 29 30 237 bekannt, aus übereinander angeordneten, aufeinander aufsetzbaren Blechstreifen gebildet sein. Die Stützkonstruktion 2 kann darstellungsgemäss über an ihr angebrachte Fussteile 7 auf dem Boden des nicht weiter dargestellten Lagerbeckens abgestützt sein. Das Lagerbecken, welches mehrere, nebeneinander angeordnete Lagergestelle 1 enthalten kann, erstreckt sich über die Höhe des Lagergestells 1 hinaus und ist mit einem Kühlmittel, z.B. Wasser, gefüllt, das zugleich als Abschirmung gegen Strahlung der Brennelemente dient. Bei der dargestellten Ausführung sind die Brennelemente 5 je mit einem seitlichen Spiel in Oeffnungen 8 und 9 der Stütz- und Haltekonstruktionen 2 bzw. 3 angeordnet und im Abstand von der unteren Stützkonstruktion 2, von dieser unabhängig, je mit einer Fusspartie 11 unmittelbar auf dem Boden des Lagerbeckens abgestützt und mit einer Kopfpartie 12 in der oberen Haltekonstruktion 3 vertikal beweglich geführt. Die entsprechend vom Gewicht der Brennelemente 5 entlastete Stützkonstruktion 2 braucht somit lediglich als Traganordnung für das Lagergestell dimensioniert zu werden und kann in einer entsprechend leichten Bauweise ausgeführt werden.

In den Zeichnungsfiguren sind aneinander entsprechende Teile mit gleichen Bezugszeichen versehen. Die Ausführung nach Fig. 2 entspricht im wesentlichen derjenigen nach Fig. 1, mit dem Unterschied, dass die Brennelemente 5 mit ihren Fusspartien 11 je über ein Tragstück 14 auf dem Boden des Lagerbeckens abgestützt sind. Die Tragstücke 14 sind darstellungsgemäss in der Stützkonstruktion 2 vertikal beweglich angeordnet und je mit einem über die Stützkonstruktion 2 vorstehenden Kopfteil ausgeführt, an dem eine Anschlagpartie 23 ausgebildet ist, die in einem Abstand A von der Stützkonstruktion 2 positionierbar ist.

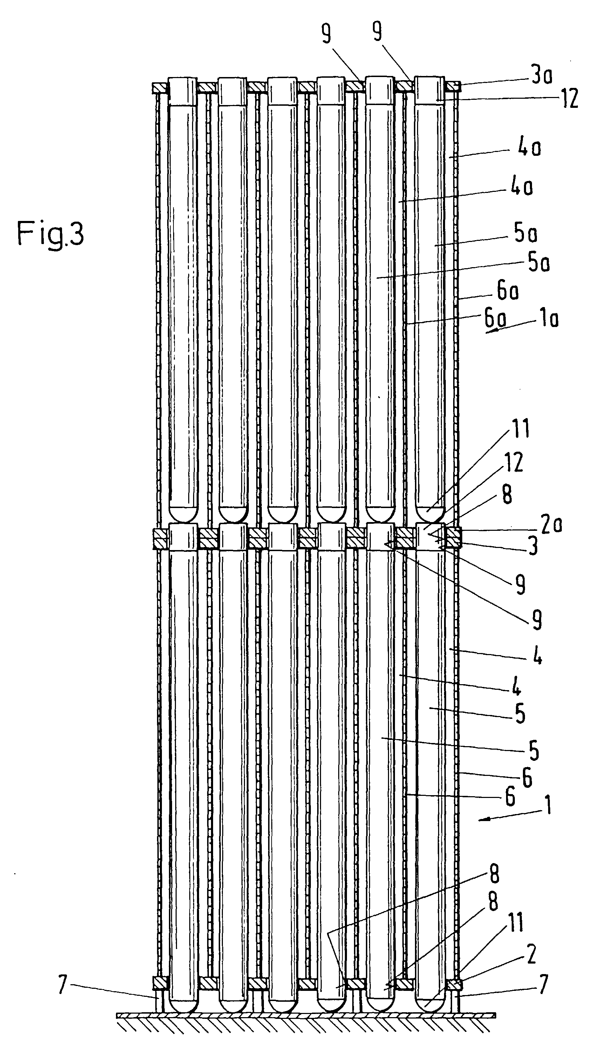

Entsprechend der Darstellung nach Fig. 3 kann auf der oberen Haltekonstruktion 3 des Lagergestells 1 ein oberes Lagergestell 1a aufgesetzt sein, welches eine entsprechende untere Stützkonstruktion 2a und eine obere Haltekonstruktion 3a aufweist und mit zu den Kanälen 4 des Lagergestells 1 fluchtenden Kanälen 4a zur Aufnahme von in einer zweiten Höhenlage einzulagernden Brennelementen 5a versehen ist. Bei dieser Ausführung sind die oberen Brennelemente 5a mit ihren Fusspartien 11 unmittelbar auf den Kopfpartien 12 der unteren Brennelemente 5 abgestützt, welche mit Positionierteilen für die Fusspartien 11 versehen sein können. Entsprechend kann auch das Gewicht der oberen Brennelemente 5a über die Brennelemente 5 ohne zusätzliche Belastung des Lagergestells 1 auf den Boden des Lagerbeckens 1 übertragen werden.

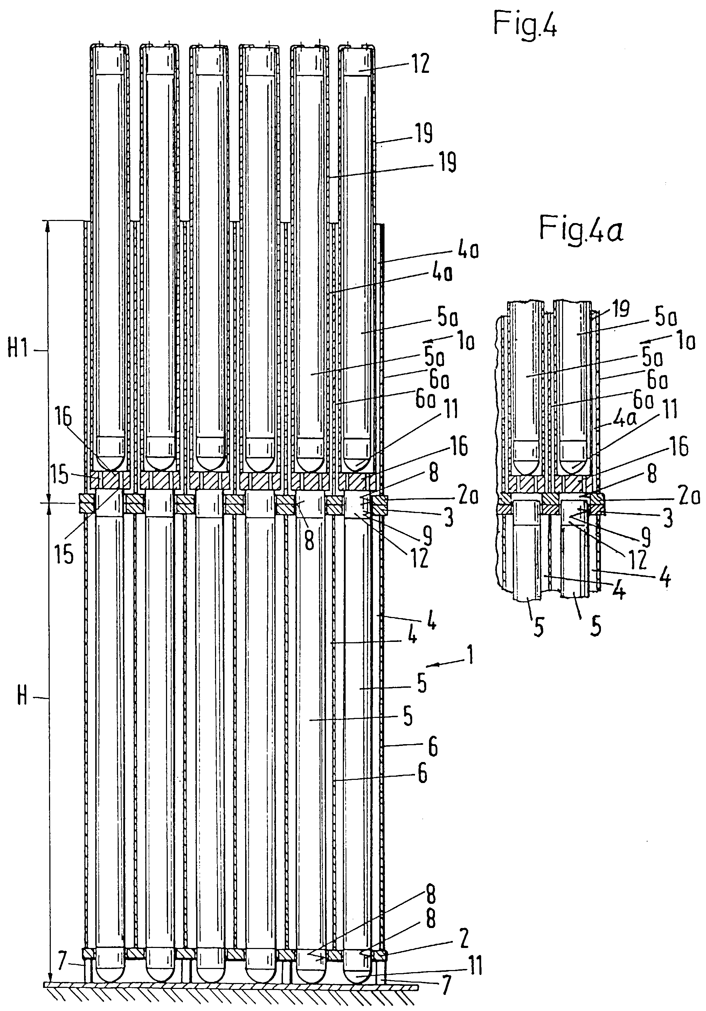

Bei der Ausführung nach Fig. 4 sind die oberen Brennelemente 5a auf den unteren Brennelementen 5 über Zwischenstücke 16 abgestützt, welche je in Form eines im entsprechenden Kanal 4a relativ zur Stützkonstruktion 2a des oberen Lagergestells 1a vertikal beweglich angeordneten Distanzhalters ausgeführt und auf die nach oben vorstehenden Kopfpartien 12 der Brennelemente 5 aufgesetzt sind. Entsprechend wird das Gewicht der Brennelemente 5a über die Zwischenstücke 16 auf die unteren Brennelemente 5 und über diese je unmittelbar auf den Boden des Lagerbeckens übertragen. Die Zwischenstücke 16 können darstellungsgemäss mit Durchtrittsöffnungen 15 ausgeführt sein, welche die Zirkulation des Kühlmittels innerhalb der Kanäle 4 und 4a sicherstellen. Die Zwischenstücke 16 können auch als mit den Brennelementen 5 - oder 5a- fest oder lösbar verbundene Positionierteile ausgebildet sein.

Bei dieser Ausführung ist ferner das obere Lagergestell la mit einer Bauhöhe H1 ausgeführt, welche kleiner ist als die Bauhöhe H des unteren Lagergestells 1 und welche daher nur einem Bruchteil der Länge der Brennelemente 5a entspricht. Wie aus der Fig. 4 weiter hervorgeht, sind die oberen Brennelemente 5a je in einer sie umgebenden Hülle 19 aus einem neutronenabsorbierenden Werkstoff angeordnet. Die Hüllen 19 sind je mit dem betreffenden Brennelement 5a fest verbunden und so geformt, dass sie mit den Brennelementen 5a je eine in einen der oberen Kanäle 4a in vertikaler Richtung einführbare Einbaueinheit bilden. Bei dieser Ausführung können die Wände 6a der Kanäle 4a aus einem schweissbaren Werkstoff bestehen und im wesentlichen als Führungsanordnung für die durch die Brennelemente 5a und die Hüllen 19 gebildeten Einbaueinheiten ausgebildet sein.

Es versteht sich, dass anstelle der in den Figuren 3 und 4 dargestellten unmittelbaren Abstützung der unteren Brennelemente 5 auch bei diesen Ausführungen zwischen den unteren Brennelementen 5 und dem Boden je ein Tragstück 14 gemäss Fig. 2 vorgesehen sein kann. Ebenso können bei der Ausführung gemäss Fig. 3 Zwischenstücke 16 zwischen den unteren und oberen Brennelementen 5 bzw. 5a vorgesehen sein.

Entsprechend der Darstellung nach Fig. 4a können die Zwischenstücke 16 als Tragteile ausgebildet sein, über welche die oberen Brennelemente 5a auf der Stützkonstruktion 2a des oberen Lagergestells 1a abgestützt sind, so dass das Gewicht der oberen Brennelemente 5a, unabhängig von den unteren Brennelementen 5, über die Kanalwände 6 auf die vom Gewicht der unteren Brennelemente 5 entlastete Stützkonstruktion 2 des unteren Lagergestells 1 übertragen wird. Dabei wird die Stützkonstruktion 2 lediglich durch über die Kanalwände 6 eingeleitete Stützkräfte, und damit entsprechend günstig, beansprucht. Die Stützkonstruktion 2 kann daher, obwohl durch das Gewicht der oberen Brennelemente 5a teilbelastet, ebenfalls in einer entsprechend leichten Bauweise ausgeführt werden.

Nach einer weiteren, nicht dargestellten Ausführungsform können die oberen Brennelemente 5a auch unmittelbar auf der Stützkonstruktion 2a des oberen Lagergestells 1a abgestützt sein. Es ist auch eine Ausführung möglich, bei der die oberen Brennelemente 5a - unmittelbar oder über entsprechende Zwischenstücke 16 - auf der oberen Haltekonstruktion 3 des unteren Lagergestells 1 abgestützt sind, wodurch die Stützkonstruktion 2a des oberen Lagergestells la in einer entsprechenden leichten, einfachen Bauweise ausgeführt werden kann

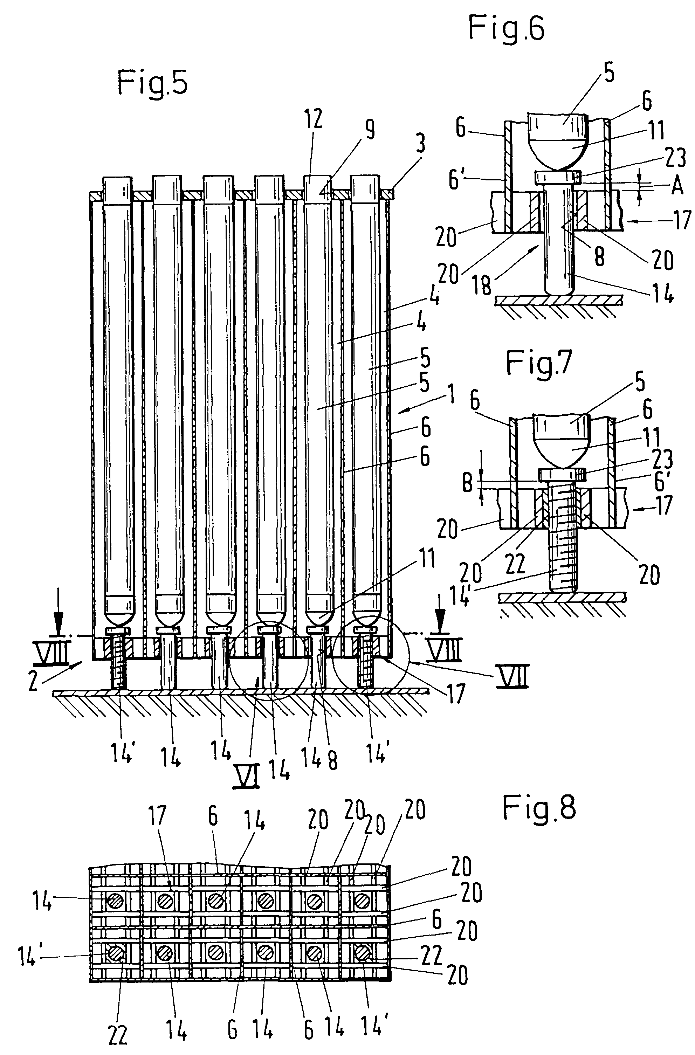

Bei der Ausführung nach den Figuren 5 und 8 ist die Stützkonstruktion 2 als ein die unteren Endabschnitte 6' der Kanalwände 6 verbindender, die Kanäle 4 unterteilender Gitterrost 17 ausgeführt, der durch Bleche aus einem schweissbaren Material gebildet sein kann. Die Endabschnitte 6' können ebenfalls durch Bleche aus schweissbarem Material gebildet sein, welche mit den Blechen aus neutronenabsorbierendem Material fluchtend angeordnet und mit dem Gitterrost 17 zu einer formstabilen Tragstruktur für die Kanäle 4 verbunden sind. In entsprechender Weise kann auch die in Fig. 5 in Form einer Platte dargestellte Haltekonstruktion 3 durch die oberen Endabschnitte der Kanalwände 6 gebildet sein. Der Gitterrost 17 enthält zumindest in einer Teilzahl der Kanäle 4 mindestens je eine Führungsanordnung 18 für eines der vertikal beweglichen Tragstücke 14 oder bildet eine solche Führungsanordnung.

Die Führungsanordnungen 18 können durch Führungsbüchsen oder, wie in Fig. 8 dargestellt, je durch zwei Paar kreuzweise angeordnete, über mehrere Kanäle 4 sich erstreckende, stehende Tragbleche 20 des Gitterrosts 17 gebildet sein, welche miteinander und mit den Blechen der Endabschnitt 6' bzw. mit der Stützkonstruktion 2 verschweisst sein können. Die meisten Tragstücke 14 sind in den Führungsanordnungen 18 in vertikaler Richtung frei verschiebbar geführt. Eine über den Querschnitt des Lagergestells 1 verteilt angeordnete Teilzahl der Tragstücke, darstellungsgemäss Tragstücke 14', sind mit dem Gitterrost 17 über Tragmittel 22 gekoppelt, über welche die untere Stützkonstruktion 2 und damit das ganze Lagergestell 1 auf diesen Tragstücken 14' abgestützt sind. Als Tragmittel 22 können darstellungsgemäss im Gitterrost 17 befestigte Gewindebüchsen vorgesehen sein, in denen die je mit einem entsprechenden Gewinde versehenen Tragstücke 14' höhenverstellbar und feststellbar geführt sind. Wie insbesondere aus den Figuren 6 und 7 hervorgeht, können die Tragstücke 14 und 14' mit Anschlagpartien 23 ausgeführt sein, die oberhalb des Gitterrosts 17 je in einem Abstand A bzw. B einstellbar sind, welcher entsprechende vertikale Relativbewegungen zwischen dem Gitterrost 17 und den Tragstücken 14 gewährleistet und eine Uebertragung des Gewichts der auf den Tragstücken 14 abgestützten Brennelemente 5 auf den Gitterrost 17 verhindert.

Die Abstände A werden so gewählt, dass sie eine kleine, voraus definierbare Bewegung des Lagergestells 1, z.B. im Erdbebenfall, zulassen ohne Belastung des Lagergestells 1 durch das Gewicht der Brennelemente. Bei einer seismischen Belastung ist zugleich eine Stabilisierung des Lagergestells 1 erzielbar, da die schulterartigen Anschlagpartien 23 der durch die Brennelemente 5 belasteten Tragstücke 14 die vertikalen Bewegungen des Gitterrosts 17 auf ein dem Abstand A entsprechendes Mass begrenzen und damit einer Kippbewegung des Lagergestells 1 bzw. der Lagergestelle 1 und 1a entgegenwirken. Die Abstände B dienen zur Einstellung der Höhenlage und zur Nivellierung der Stützkonstruktion 2, unabhängig von der Beschaffenheit des Bodens des Lagerbeckens.

Zusammenfassend lässt sich die Erfindung wie folgt beschreiben:

Ein in einem Lagerbecken angeordnetes Lagergestell 1 enthält mehrere vertikale Kanäle 4 zur Aufnahme von Brennelementen 5. Die Kanäle 4, deren Wände 6 durch Bleche aus einem neutronenabsorbierenden Werkstoff gebildet sind, sind auf einer auf dem Boden des Lagerbeckens abstützbaren, vom Gewicht der Brennelemente 5 entlasteten Stützkonstruktion 2 angeordnet. Die Brennelemente 5 sind je für sich im Abstand von der Stützkonstruktion 2 auf dem Boden des Wasserbeckens abgestützt. Entsprechend kann das Lagergestell 1 in einer vorteilhaft leichten Bauweise ausgeführt werden. Zugleich wird eine optimale, gleichmässige Verteilung der Baulasten auf den Boden des Lagerbeckens erzielt. Aufgrund der Entlastung der Stützkonstruktion 2 vom Gewicht der Brennelemente 5 und der gleichmässigen Lastverteilung auf den Boden des Lagerbeckens sind günstige Bedingungen für den Aufbau einer zweiten, oberen Schicht von einzulagernden Brennelementen geschaffen, wodurch die Lagerkapazität wesentlich erhöht werden kann.

## Patentansprüche

1. Lageranordnung zum Lagern nuklearer Brennelemente, mit mindestens einem in einem Lagerbecken anbringbaren Lagergestell (1), welches mehrere nebeneinander angeordnete, zur Aufnahme der Brennelemente (5) bestimmte vertikale Kanäle (4) enthält, deren Wände (6) durch Bleche aus einem neutronenabsorbierenden Werkstoff gebildet sind, welche auf einer auf dem Boden des Lagerbeckens abstützbaren Stützkonstruktion (2) angeordnet sind, die als Traganordnung für die Kanäle (4) ausgebildet ist, dadurch gekennzeichnet, dass die Brennelemente (5) im Abstand von der Stützkonstruktion (2) angeordnet und von dieser unabhängig je über ein Tragstück (14, 14') auf dem Boden des Lagerbeckens abgestützt sind, und dass die Tragstücke (14, 14') mindestens einer Teilzahl der Brennelemente (5) in der Stützkonstruktion (2) in vertikaler Richtung bewegbar angeordnet und je mit einer einer oberen Partie der Stützkonstruktion (2) zugeordneten Anschlagpartie (23) ausgeführt sind, die in Einbaustellung einen vertikalen Abstand (A bzw. B) von dieser oberen Partie aufweist.

2. Lageranordnung nach Anspruch 1, dadurch gekennzeichnet, dass zur Aufnahme von in einer zweiten Höhenlage einzulagernden, oberen Brennelementen (5a) ein auf den oberen Teil des einen, unteren Lagergestells (1) aufsetzbares, oberes Lagergestell (1a) mit zu den Kanälen (4) des unteren Lagergestells (1) fluchtenden oberen Kanälen (4a) vorgesehen ist.

3. Lageranordnung nach Anspruch 2, dadurch gekennzeichnet, dass die oberen Brennelemente (5a) je auf dem im entsprechenden unteren Kanal (4) angeordneten unteren Brennelement (5) abgestützt sind.

4. Lageranordnung nach Anspruch 2, dadurch gekennzeichnet, dass die oberen Brennelemente (5a) je auf einem im oberen Lagergestell (1a) angeordneten Zwischenstück (16) abgestützt sind.

5. Lageranordnung nach Anspruch 4, dadurch gekennzeichnet, dass das Zwischenstück (16) als in vertikaler Richtung beweglicher Distanzhalter ausgebildet und auf dem im entprechenden Kanal (4) des unteren Lagergestells (1) angeordneten Brennelement (5) abgestützt ist.

6. Lageranordnung nach Anspruch 4, dadurch gekennzeichnet, dass das Zwischenstück (16) als Tragteil ausgebildet und auf einer am oberen Lagergestell (1a) ausgebildeten Stützkonstruktion (2a) abgestüzt ist.

7. Lageranordnung nach einem der Ansprüche 4 bis 6, dadurch gekennzeichnet, dass das Zwischenstück (16) als mit einem der Brennelemente (5 bzw. 5a) verbundener oder verbindbarer Positionierteil ausgebildet ist.

8. Lageranordnung nach einem der Ansprüche 2 bis 7, dadurch gekennzeichnet, dass das obere Lagergestell (1a) mit einer kleineren Höhenabmessung (H1) ausgeführt ist als das untere Lagergestell (1), dass die oberen Brennelemente (5a) je einzeln in einer mit dem betreffenden Brennelement (5a) verbundenen Hülle (19) aus einem neutronenabsorbierenden Werkstoff angeordnet sind und dass diese Hüllen (19) so ausgeführt sind, dass sie in die Kanäle (4a) des oberen Lagergestells (1a) passen und in vertikaler Richtung beweglich einbaubar sind.

9. Lagergestell für eine Lageranordnung nach einem der Ansprüche 1 bis 8, dadurch gekennzeichnet, dass die auf dem Boden des Lagerbeckens abstützbare Stützkonstruktion (2) als ein die Kanäle (4) unterteilender Gitterrost (17) ausgeführt ist, welcher zumindest in einer Teilzahl dieser Kanäle (4) je mindestens eine Führungsanordnung (18) für eines der vertikal bewegbaren Tragstücke (14, 14') bildet.

10. Lagergestell nach Anspruch 9, dadurch gekennzeichnet, dass eine Teilzahl der Tragstücke (14') mit dem Gitterrost (17) über Stützmittel (22) verbunden sind, über welche der Gitterrost (17) auf diesen Tragstücken (14') abgestützt ist.

11. Lagergestell nach Anspruch 10, dadurch gekennzeichnet, dass die Stützmittel (22) je eine höhenverstellbare Verbindung zwischen dem betreffenden Tragstück (14') und dem Gitterrost (17) enthalten.

## Claims

1. Storage arrangement for the storage of nuclear fuel elements with at least one storage framework (1) which can be placed in a storage basin, which contains a plurality of vertical channels (4) arranged adjacent to one another for the purpose of receiving the fuel elements (5), with the walls (6) of the channels (4), which are formed of sheet metal of a neutron absorbing material, being arranged on a support construction (2) that can be supported on the floor of the storage basin and is formed as a carrier arrangement for the channels (4), characterised in that the fuel elements (5) are arranged at a distance from the support construction (2) and are each supported on the floor of the storage basin via a support member (14, 14') independently of this support construction (2), in that the support members (14, 14') of at least some of the fuel elements (5) are movably arranged in the vertical direction in the support construction (2) and are each executed with an abutment part (23) associated with the upper part of the support construction (2) and having a vertical distance (A or B respectively) from this upper part in the installed position.

2. Storage arrangement in accordance with claim 1, characterised in that an upper storage framework (1a) is provided for receiving upper fuel elements (5a) to be stored at a second height level, which upper storage framework (1a) can be placed upon the upper part of the one, lower storage framework (1) and has upper channels (4a) aligned with the channels (4) of the lower storage framework (1).

3. Storage arrangement in accordance with claim 2, characterised in that the upper fuel elements (5a) are each supported on the lower fuel element (5) placed in the corresponding lower channel (4).

4. Storage arrangement in accordance with claim 2, characterised in that the upper fuel elements (5a) are each supported on an intermediate piece (16) arranged in the upper storage framework (1a).

5. Storage arrangement in accordance with claim 4, characterised in that the intermediate piece (16) is formed as a spacer movable in the vertical direction and supported on the fuel elements (5) arranged in the corresponding channel (4) of the lower storage framework (1).

6. Storage arrangement in accordance with claim 4, characterised in that the intermediate piece (16) is formed as a carrier part and supported on a support construction (2a) formed on the upper storage framework (1a).

7. Storage arrangement in accordance with one of the claims 4 to 6, characterised in that the intermediate piece (16) is formed as a positioning part connected or connectable to one of the fuel elements (5, 5a respectively).

8. Storage arrangement in accordance with one of the claims 2 to 7, characterised in that the upper storage framework (1a) is executed with a smaller height dimension (H1) than the lower storage framework (1); in that the upper fuel elements (5a) are each placed individually in a sleeve (19) of a neutron absorbing material connected to the corresponding fuel element (5a); and in that these sleeves (19) are executed in such a manner that they fit into the channels (4a) of the upper storage framework (1a) and can be built in so as to be movable in the vertical direction.

9. Storage framework for a storage arrangement according to one of the claims 1 to 8, characterised in that the support construction (2), which can be supported on the floor of the storage basin, is executed as a grid (17) subdividing the channels (4) which, at least in some of these channels (4), respectively forms at least one guidance arrangement (18) for one of the vertically movable support members (14, 14').

10. Storage framework in accordance with claim 9, characterised in that some of the support members (14') are connected to the grid (17) via supporting means (22) via which the grid (17) is supported on these support members (14').

11. Storage framework in accordance with claim 10, characterised in that the supporting means (22) each contain a vertically adjustable connection between the corresponding support member (14') and the grid (17).

## Revendications

1. Agencement de stockage pour le stockage d'éléments de combustible nucléaires, avec au moins un bâti de stockage (1) pouvant être disposé dans un bassin de stockage qui comporte plusieurs canaux verticaux (4) disposés les uns à côté des autres, prévus pour recevoir les éléments de combustible (5), dont les parois (6) sont formés par des tôles en un matériau absorbant les neutrons qui sont disposés sur une construction d'appui (2) s'appuyant sur le fond du bassin de stockage qui est réalisé comme agencement de support pour les canaux (4), caractérisé en ce que les éléments de combustible (5) sont disposés à un certain écart de la construction d'appui (2) et s'appuient, indépendamment de celle-ci, chacun par une pièce de support (14, 14') sur le fond du bassin de stockage, et en ce que les pièces de support (14, 14') au moins d'un nombre partiel des éléments de combustible (5) sont disposées dans la construction d'appui (2) d'une manière mobile dans la direction verticale et sont réalisées chacune avec une partie de butée (23) associée à une partie supérieure de la construction d'appui (2) qui, dans la position de montage, présente un écart vertical (A respectivement B) relativement à cette partie supérieure.

2. Agencement de stockage selon la revendication 1, caractérisé en ce qu'il est prévu pour la réception d'éléments de combustible supérieurs (5a) à stocker dans une deuxième position en hauteur un bâti de stockage supérieur (1a) pouvant être placé sur la partie supérieure d'un bâti de stockage inférieur (1), avec des canaux supérieurs (4a) alignés avec les canaux (4) du bâti de stockage inférieur (1).

3. Agencement de stockage selon la revendication 2, caractérisé en ce que les éléments de combustible supérieurs (5a) prennent appui chacun sur l'élément de combustible inférieur (5) disposé dans le canal inférieur correspondant (4).

4. Agencement de stockage selon la revendication 2, caractérisé en ce que les éléments de combustible supérieurs (5a) prennent appui chacun sur une pièce intermédiaire (16) disposée dans le bâti de stockage supérieur (1a).

5. Agencement de stockage selon la revendication 4, caractérisé en ce que la pièce intermédiaire (16) est réalisée sous forme de pièce d'écartement mobile dans la direction verticale et prend appui sur l'élément de combustible (5) disposé dans le canal correspondant (4) du bâti de stockage inférieur (1).

6. Agencement de stockage selon la revendication 4, caractérisé en ce que la pièce intermédiaire (16) est réalisée sous forme de partie de support et prend appui sur une construction d'appui (2a) réalisée au bâti de stockage supérieur (1a).

7. Agencement de stockage selon l'une des revendications 4 à 6, caractérisé en ce que la pièce intermédiaire (16) est réalisée sous forme de partie de positionnement reliée ou pouvant être reliée à l'un des éléments de combustible (5 respectivement 5a).

8. Agencement de stockage selon l'une des revendications 2 à 7, caractérisé en ce que le bâti de stockage supérieur (1a) est réalisé avec une plus petite dimension en hauteur (H1) que le bâti de stockage inférieur (1), en ce que les éléments de combustible supérieurs (5a) sont disposés chacun individuellement dans une gaine (19) reliée à l'élément de combustible concerné (5a) en un matériau absorbant les neutrons, et en ce que ces gaines (19) sont réalisées de telle manière qu'elles s'adaptent dans les canaux (4a) du bâti de stockage supérieur (1a) et peuvent être installées d'une manière mobile dans la direction verticale.

9. Bâti de stockage pour un agencement de stockage selon l'une des revendications 1 à 8, caractérisé en ce que la construction d'appui (2) pouvant s'appuyer sur le fond du bassin de stockage est réalisée sous forme de sommier (17) subdivisant les canaux (4) qui constitue au moins par un nombre partiel de ces canaux (4) respectivement au moins un agencement de guidage (18) pour l'une des pièces de support (14, 14') déplaçable verticalement.

10. Bâti de stockage selon la revendication 9, caractérisé en ce qu'un nombre partiel des pièces de support (14') sont reliées au sommier (17) par des moyens d'appui (22) par lesquels le sommier (17) prend appui sur ces pièces de support (14').

11. Bâti de stockage selon la revendication 10, caractérisé en ce que les moyens d'appui (22) comportent chacun une liaison ajustable en hauteur entre la pièce de support concernée (14') et le sommier (17).
